# EUROPÄISCHE PATENTANMELDUNG

(11) **EP 4 563 722 A1**
(43) Veröffentlichungstag der Anmeldung: **04.06.2025**
(21) Anmeldenummer: 24215240.3
(22) Anmeldetag: 25.11.2024
(51) Int. Cl.: C23C 24/08, F16D 65/12, F16D 69/02, F16D 69/00

(54) **BESCHICHTETES BREMSELEMENT UND VERFAHREN ZUR HERSTELLUNG DES BESCHICHTETEN BREMSELEMENTS**

(30) Priorität: 29.11.2023 DE 102023133452
(71) Anmelder: IMPACT-Innovations-GmbH, 84431 Haun/Rattenkirchen (DE)
(72) Erfinder: Bernhard, Sascha, 84431 Rattenkirchen (DE); Gropp, Andreas, 84431 Rattenkirchen (DE); Meinicke, Maximilian, 84431 Rattenkirchen (DE); Singh, Reeti, 84431 Rattenkirchen (DE); Kondas, Jan, 84431 Rattenkirchen (DE); Pichlmeier, Sebastian, 84431 Rattenkirchen (DE); Noll, Severin, 84431 Rattenkirchen (DE); Holzgaßner, Leonhard, 84431 Rattenkirchen (DE)
(74) Vertreter: Flach Bauer & Partner Patentanwälte mbB

(57) **Zusammenfassung**

Die vorliegende Erfindung betrifft ein beschichtetes Bremselement 1 sowie ein Verfahren zu dessen Herstellung. Das beschichtete Bremselement 1 umfasst einen Grundkörper 10 der zumindest eine Reibfläche 12, 15 aufweist. Auf der zumindest einen Reibfläche 12, 15 ist eine Beschichtung 13, 16 angeordnet, wobei die Beschichtung 13, 16 eine Zwischenschicht 23, 26 und eine Reibschicht 33, 36 umfasst. Die Zwischenschicht ist zwischen dem Grundkörper 10 und der Reibschicht 33, 36 angeordnet und mittels Laserauftragsschweißen auf die Reibfläche 12, 15 aufgebracht. Die Reibschicht 33, 36 ist mittels Kaltgasspritzen aufgebracht und umfasst einen Metallwerkstoff und einen Verschleißwerkstoff, wobei der Verschleißwerkstoff zumindest teilweise in den Metallwerkstoff eingebettet ist.

## Beschreibung

### Gebiet der Erfindung

Die Erfindung betrifft ein beschichtetes Bremselement, insbesondere eine Bremsschreibe oder eine Bremstrommel, sowie ein Verfahren zur Herstellung des beschichteten Bremselements.

### Hintergrund

Bremselemente wie Bremstrommeln oder Bremsscheiben, die beispielsweis für Bremsen (z.B. Trommel- oder Scheibenbremsen) von Fahrzeugen verwendet werden, weisen üblicherweise einen aus Grauguss, Stahlguss oder Aluminiumguss bestehenden Grundkörper auf. Im Falle von Bremsscheiben sind beispielsweise die beiden Seitenflächen der Bremsscheiben als Reibfläche ausgebildet. Bei einer Trommelbremse ist die Reibfläche typischerweise auf einer zylindrischen Fläche (der Bremstrommel) ausgebildet.

Bei Trommel- und Scheibenbremsen handelt es sich jeweils um Reibungsbremsen. Die Bremswirkung bzw. Verzögerung des Fahrzeugs wird dadurch erreicht, dass Bremsbelägen auf mechanische, hydraulische oder pneumatische Weise auf die Reibfläche(n) gedrückt werden.

Aufgrund der hohen Reibkräfte und der dadurch bedingten Hitzeentwicklung unterliegen bekannte Bremsscheiben und -trommeln einem hohen Verschleiß. Zudem werden beim Bremsen Partikel von den Bremsscheiben bzw. -trommeln abgerieben. Dieser Abrieb belastet als Feinstaub die Umwelt.

Ein weiteres Problem stellt die Korrosionsanfälligkeit bekannter Bremsscheiben und -trommeln dar. Um den Verschleiß und somit auch die Feinstaubbildung zu reduzieren, sind unterschiedliche Ansätze bekannt.

Beispielsweise werden bekannte Bremsen als geschlossene Systeme betrieben, aus denen der Bremsabrieb nicht oder nur kontrolliert (z.B. über eine Absaugung) entweichen kann. Zudem sind Bremsscheiben bzw. Bremstrommeln bekannt, deren Reibflächen beschichtet sind. Die Beschichtung soll die Standzeit der Bremsscheibe/-trommel erhöhen und den Abrieb minimieren.

Bekannte Beschichtungen neigen oftmals zur Delamination, sodass sich die Beschichtung vom Grundkörper löst. Dies kann zu einer drastischen Reduzierung der Bremswirkung führen und so ein Sicherheitsrisiko darstellen. Zudem weisen bekannte Beschichtungen oft eine geringe Wärmeleitfähigkeit auf, sodass die beim Bremsen entstehende Wärme nur schlecht abgeführt wird und zu einer zusätzlichen thermischen Belastung der Bremse, insbesondere der Beschichtung führt.

### Zusammenfassung

Der Erfindung liegt die Aufgabe zugrunde, ein Bremselement, insbesondere eine Bremsscheibe oder Bremstrommel, bereitzustellen, welches die zuvor genannten Nachteile zumindest teilweise überwindet. Zudem soll ein Verfahren zur Herstellung dieses Bremselements bereitgestellt werden.

Diese Aufgabe wird erfindungsgemäß durch ein beschichtetes Bremselement nach Anspruch 1, durch eine Bremsvorrichtung nach Anspruch 14 sowie durch ein Verfahren zur Herstellung des beschichteten Bremselements nach Anspruch 15 gelöst. Weitere Aspekte der Erfindung sind in den abhängigen Ansprüchen, sowie in der nachfolgenden Beschreibung beschrieben.

Insbesondere wird die Aufgabe durch ein beschichtetes Bremselement gelöst, welches einen Grundkörper und zumindest eine Reibfläche aufweist, welche Reibfläche am Grundkörper angeordnet ist.

Das Bremselement kann beispielsweise eine Bremsschreibe oder eine Bremstrommel sein. Im Falle einer Bremsscheibe können eine oder mehrere Reibflächen vorgesehen sein. Diese Reibflächen können sich auf gegenüberliegenden Seiten der Bremsscheibe befinden, und/oder in radialer Richtung versetzt angeordnet sein, vorzugsweise konzentrisch. Im Falle einer Bremstrommel, ist die Reibfläche/sind die Reibflächen typischerweise auf einer inneren zylindrischen Fläche angeordnet, wobei die Reibflächen in axialer Richtung versetzt angeordnet sein können.

Das beschichtete Bremselement kann ein Bremselement einer Fahrradbremse, einer Motorradbremse, einer PKW-Bremse, einer LKW-Bremse, einer Nutzfahrzeugbremse, einer Schienenfahrzeugbremse, und/oder dergleichen sein. Der Einsatz des Bremselements bzw. einer entsprechenden Bremsvorrichtung ist nicht auf Fahrzeuge beschränkt. So kann das beschichtete Bremselement ein Bremselement einer Maschine sein.

Auf der zumindest eine Reibfläche ist eine Beschichtung angeordnet, wobei die Beschichtung zumindest eine Zwischenschicht und eine Reibschicht umfasst. In einem Aspekt sind weitere Schichten vorgesehen (beispielsweise unter der Zwischenschicht, zwischen der Zwischenschicht und der Reibschicht und/oder über der Reibschicht). In einem anderen Aspekt besteht die Beschichtung aus der Zwischenschicht und der Reibschicht, wobei die Beschichtung unmittelbar (d.h. direkt) auf der Reibfläche des Grundkörpers angeordnet ist.

Die Zwischenschicht ist zwischen dem Grundkörper (insbesondere der Reibfläche des Grundkörpers) und der Reibschicht angeordnet und mittels Laserauftragsschweißen auf die Reibfläche aufgebracht. Wie oben beschrieben kann die Zwischenschicht mittelbar oder unmittelbar auf die Reibfläche aufgebracht sein.

Das Laserauftragsschweißen ist ein Auftragsverfahren, das sich insbesondere für das Auftragen von Metallwerkstoffen eignet. Über einen Laser (beispielsweise ein Nd:YAG-Laser, ein COz-Laser, oder dergleichen) wird eine Oberfläche eines Bauteils (hier beispielsweise die zu beschichtende Reibfläche des Grundkörpers) gezielt und kontrolliert aufgeschmolzen. Mithin bildet sich ein lokal eng begrenztes Schmelzbad. Durch die lokale Begrenzung des Schmelzbades ist der Wärmeeintrag in den Grundkörper vergleichsweise gering.

Zeitgleich wird ein (metallisches) Material, welches sodann die Zwischenschicht bildet, in das vom Laser erzeugte Schmelzbad appliziert. Das Material kann neben Metall und Metalllegierungen auch Zusatzstoffe umfassen.

Das Material der Zwischenschicht wird beispielsweise als Pulver über eine Düse oder als Draht in das Schmelzbad appliziert. Im Schmelzbad vermischt sich das aufgeschmolzene Material des Bauteils (z.B. des Grundkörpers) mit dem applizierten Material, sodass sich eine feste, insbesondere metallurgische (z.B. verschweißte) Verbindung zwischen der Zwischenschicht und dem Bauteil ausbildet.

Strukturell ist die mittels Laserauftragsschweißen gebildete Zwischenschicht mithin an einem Übergangsbereich, auch als Aufmischungszone bezeichnet, zu erkennen. In der Aufmischungszone liegen das applizierte Material der Zwischenschicht und das Material des Bauteils (insbesondere des Grundkörpers) in Mischung vor.

Insbesondere kann beim Laserauftragsschweißen der Zwischenschicht auch ein Gemisch an unterschiedlichen Beschichtungsmaterialien zeitgleich oder sequentiell aufgetragen werden. Zum Beispiel kann auf die Reibfläche eine Legierung aus Nickel und/oder Eisen aufgebracht werden. Über die Zusammensetzung der Legierung und über optionale Zusatzstoffe können die Härte, die Wärmeleitfähigkeit und/oder der Wärmeausdehnungskoeffizient der Zwischenschicht eingestellt werden.

Grundsätzlich können unterschiedliche Laserauftragsschweiß-Verfahren zum Aufbringen der Zwischenschicht genutzt werden. Diese umfassen beispielsweise Laser Cladding, LC, High-Speed Laser Cladding, HSLC, und Extremes Hochgeschwindigkeits-Laserauftragsschweißen, EHLA.

Beim Laser Cladding, LC, wird ein Laserstrahl verwendet, um das Material der Zwischenschicht auf die Reibfläche aufzubringen. Das aufgebrachte Material (beispielsweise in Form von Draht oder Pulver) wird im Schmelzbad erhitzt und zusammen mit dem Material der Reibfläche bzw. des Grundkörpers aufgeschmolzen. Das Laser Cladding ermöglicht eine präzise Steuerung der Beschichtungsdicke, Mikrostruktur und Materialzusammensetzung der Zwischenschicht.

High-Speed Laser Cladding, HSLC, basiert auf dem Laser Cladding, ermöglicht jedoch eine höhere Beschichtungsgeschwindigkeit. Beim High-Speed Laser Cladding wird das Beschichtungsmaterial (insbesondere Pulver) bereits über der Bauteiloberfläche (d.h. außerhalb des Schmelzbads) mittels des Lasers nahezu auf Schmelztemperatur aufgeheizt. Dadurch wird weniger Zeit für das Aufschmelzen des Materials der Zwischenschicht im Schmelzbad benötigt.

Extremes Hochgeschwindigkeits-Laserauftragsschweißen, EHLA, basiert ebenfalls auf dem Laser Cladding und ermöglicht eine weitere Steigerung der Beschichtungsgeschwindigkeit. Beim EHLA-Verfahren schmilzt der Laser das Beschichtungsmaterial bereits oberhalb des Schmelzbades auf. So gelangen flüssige Materialtropfen statt fester Pulverpartikel in das Schmelzbad. Neben einer höheren Beschichtungsgeschwindigkeit werden so auch glattere Oberflächen erzielt.

Die Reibschicht des Bremselements ist mittels Kaltgasspritzen aufgebracht. Die Reibschicht umfasst zumindest einen Metallwerkstoff. Die Reibschicht kann aus dem Metallwerkstoff bestehen, oder weitere Werkstoffe (Zusatzwerkstoffe und/oder Verschleißwerkstoffe) umfassen.

Insbesondere kann die Reibschicht einen Verschleißwerkstoff umfassen. In der Reibschicht ist der Verschleißwerkstoff in den Metallwerkstoff zumindest teilweise eingebettet. Der Metallwerkstoff bildet somit eine Matrix für den Verschleißwerkstoff.

Die Reibschicht kann zwischen 95 Gewichts% bis 5 Gewichts% Metallwerkstoff umfassen. Entsprechend kann die Reibschicht 5 Gewichts% bis 95 Gewichts% Verschleißwerkstoff umfassen. In einer Ausführungsform umfasst die Reibschicht 75 Gewichts% bis 25 Gewichts% Metallwerkstoff und 25 Gewichts% bis 75 Gewichts% Verschleißwerkstoff. Zusatzstoffe können ebenfalls Teil der Reibschicht sein. Der Anteil des Metallwerkstoffs und/oder des Verschleißwerkstoffs reduziert sich in diesem Fall entsprechend.

Beim Kaltgasspritzen wird der Beschichtungswerkstoff (d.h. das Material der späteren Reibschicht) in Pulverform mit sehr hoher Geschwindigkeit auf das Trägermaterial (hier die Zwischenschicht) aufgebracht. Der Beschichtungswerkstoff kann neben dem Metallwerkstoff und dem optionalen Verschleißwerkstoff weitere Zusatzstoffe, wie Kupferpartikel umfassen. Über die Zusammensetzung des Beschichtungswerkstoffs kann die Härte, die Reibfestigkeit, die Wärmeleitfähigkeit und/oder der Wärmeausdehnungskoeffizienten der Reibschicht eingestellt werden.

Der Beschichtungswerkstoff kann in Form eines einheitlichen Pulvers vorliegen, oder unterschiedliche Pulver (Pulvergemisch) umfassen.

Im Falle eines einheitlichen Pulvers kann das Pulver beispielsweise aus dem Metallwerkstoff bestehen. Soll die Reibschicht neben dem Metallwerkstoff zumindest einen Verschleißwerkstoff (und/oder Zusatzstoff) umfassen, können die Pulverpartikel neben dem Metallwerkstoff den zumindest einen Verschleißwerkstoff, ein Vorprodukt des zumindest einen Verschleißwerkstoffs und/oder den zumindest eine Zusatzwerkstoff umfassen. Der Verschleißwerkstoff (bzw. ein Vorprodukt und/oder Zusatzwerkstoff) sind mithin bereits vor dem Kaltgasspritzen in dem Metallwerkstoff zumindest teilweise eingebettet.

Im Falle eines Pulvergemischs, können unterschiedliche Pulver zeitgleich oder sequentiell Kaltgasgespritzt werden. Ein erstes Pulver kann beispielsweise den Metallwerkstoff und ein zweites Pulver einen Verschleißwerkstoff umfassen. Weitere Pulver (z.B. für einen Zusatzstoff oder für ein Vorprodukt eines Verschleißwerkstoffs) können entsprechend vorgesehen werden. In diesem Fall wird der Verschleißwerkstoff (bzw. der Zusatzstoff) beim Kaltgasspritzen zumindest teilweise in den Metallwerkstoff (Matrix) eingebettet.

Wird ein Vorprodukt des Verschleißwerkstoffs bereitgestellt (beispielsweise als eigenständiges Pulver oder eingebettet in einen Metallwerkstoff) kann das Vorprodukt während des Kaltgasspritzens chemisch zum Verschleißwerkstoff umgewandelt werden, beispielsweise durch eine Karbidisierung und/oder Oxidation. Hierzu können Vorprodukt und Prozessgas entsprechend gewählt und falls erforderlich vortemperiert werden. Das Vorprodukt kann auch dem Metallwerkstoff entsprechen, d.h. integral mit dem Metallwerkstoff ausgebildet sein. In diesem Fall wird ein Teil des Metallwerkstoffs vor und/oder während des Kaltgasspritzens in den Verschleißwerkstoff umgewandelt.

Um den Beschichtungswerkstoff entsprechend zu beschleunigen wird ein Prozessgas (wie Luft, CO₂, Stickstoff, Argon, Wasserdampf oder Helium) unter hohem Druck (beispielsweise zumindest 20 bar, oder zumindest 40 bar, oder zumindest 50 bar, oder zumindest 60 bar, oder zumindest 80 bar) in eine Spritzvorrichtung geleitet und temperiert. Die Temperierungstemperatur liegt in einem Bereich von 300 bis 1300 °C, oder im Bereich von 500°C bis 1200°C, oder in einem Bereich von 800°C bis 1100°C. In der Spritzvorrichtung wird das Prozessgas mit zumindest einem Teil des pulverförmigen Beschichtungswerkstoffs vermischt, wobei die Erwärmungstemperatur unterhalb der Schmelztemperatur des Beschichtungswerkstoffs liegt.

Soll ein Vorprodukt in einen Verschleißwerkstoff umgewandelt werden, so kann ein pulverförmiges Vorprodukt vor der Vermischung mit dem Metallwerkstoff zusammen mit einem Prozessgas vermischt und temperiert werden, sodass sich der Verschleißwerkstoff bildet. Ebenso kann sich der Verschleißwerkstoff zu einem Zeitpunkt bilden, bei dem der Metallwerkstoff und das Vorprodukt bereits vermischt sind. Zudem kann das Vorprodukt integral mit dem Metallwerkstoff ausgebildet sein. In diesem Fall wird ein Teil des Metallwerkstoffs vor und/oder während des Kaltgasspritzens in den Verschleißwerkstoff umgewandelt.

Anschließend wird das Pulver-Gas-Gemisch durch eine konvergent-divergent geformte Düse (Laval-Düse) geleitet. Dies hat zur Folge, dass das Pulver-Gas-Gemisch auf sehr hohe Geschwindigkeiten, insbesondere auf Überschallgeschwindigkeit (beispielsweise zumindest 300m/s, oder zumindest 500 m/s, oder zumindest 800 m/s, oder zumindest 1000 m/s, oder zumindest 1200 m/s), beschleunigt wird. Zudem kühlt das Pulver-Gas-Gemisch stark ab, beispielsweise auf Temperaturen von unter 100°C.

Der stark beschleunigte, pulverförmige Beschichtungswerkstoff kann in einem Spritzstrahl auf das Trägermaterial bzw. die Zwischenschicht geleitet werden. Zudem kann der Spritzstrahl fokussiert werden, sodass er beispielsweise mit einer Querschnittsfläche von 3 mm² bis 100 mm², oder von 5 mm² bis 80 mm² oder von 10 mm² bis 50 mm² auf das Trägermaterial auftrifft.

Der pulverförmige Beschichtungswerkstoff verbindet sich sodann aufgrund der hohen kinetischen Energie fest mit dem Trägermaterial. Die einzelnen Pulverpartikel verformen das Trägermaterial (insbesondere die Zwischenschicht) punktuell und werden beim Auftreffen selbst verformt. Somit wird das Trägermaterial zumindest oberflächlich verdichtet und eine feste Verbindung zwischen dem Trägermaterial (z.B. der Zwischenschicht) und dem Beschichtungswerkstoff bzw. der Reibschicht hergestellt. Der kaltgasgespritzte Beschichtungswerkstoff haftet im Wesentlichen formschlüssig an. Zudem wird während des Kaltgasspritzens der Beschichtungswerkstoff weder an- noch aufgeschmolzen, sodass die Gefahr einer unerwünschten Oxidation des Beschichtungswerkstoffs gering ist.

Es hat sich überraschend gezeigt, dass die Beschichtung aus der kaltgasgespritzten Reibschicht und der laserauftragsgeschweißten Zwischenschicht eine sehr hohe Haftfestigkeit am Grundkörper sowie eine sehr gute Schichthaftung innerhalb der Beschichtung aufweist. Denn die laserauftragsgeschweißte Zwischenschicht haftet aufgrund der stoffschlüssigen Verbindung sehr gut an der Reibfläche an. Das Laserauftragsschweißen führt jedoch zunächst zu einer Zwischenschicht, die eine hohe innere Spannung und eine hohe Oberflächenrauheit aufweist. Somit ist diese Zwischenschicht (vor dem Kaltgasspritzen der Reibschicht) trotz der guten Anhaftung anfällig für Rissbildung. Das nachfolgende Kaltgasspritzen, d.h. der Auftrag der Reibschicht, reduziert die Spannungen in der Zwischenschicht und verdichtet diese zumindest oberflächlich. Dies Erfolgt durch die verformende Wirkung der auftreffenden Pulverpartikel des Beschichtungswerkstoffs, sodass die Rissbildungsgefahr signifikant gesenkt wird. Die Rauheit der Zwischenschicht führt zudem zu einer guten Anhaftung der Reibschicht.

Die erfindungsmäße Beschichtung ist außerordentlich dicht und weist eine hohe Kohäsionsfestigkeit auf, sodass Risswachstum aufgrund thermischer und/oder mechanischer Belastung (insbesondere von der Reibschicht durch die Zwischenschicht in die Reibfläche bzw. den Grundkörper) vermieden werden kann. Zudem ist die Beschichtung Beständigkeit gegenüber Korrosion (insbesondere Spalt-, Lochfraß- und Galvanische-Korrosion).

Die Zwischenschicht kann darüber hinaus einen möglichen Unterschied in der Wärmeleitfähigkeit und/oder des Wärmeausdehnungskoeffizienten zwischen dem Grundkörper und der Reibschicht ausgleichen. Dazu weist die Zwischenschicht beispielsweise eine Wärmeleitfähigkeit auf, die über oder zwischen der Wärmeleitfähigkeit des Grundkörpers und der Reibschicht liegt, sodass beim Bremsen entstehende Wärme schnell von der Oberfläche abgeleitet werden kann. Zudem weist die Zwischenschicht beispielsweise einen Wärmeausdehnungskoeffizienten auf, der zwischen dem Wärmeausdehnungskoeffizienten des Grundkörpers und der Reibschicht liegt. Somit können thermisch induzierte Spannungen in dem Bremselement vermieden, zumindest aber verringert werden.

Weiterhin führt das Laserauftragsschweißen zu einer Oberflächentopologie (insbesondere Rauheit) der Zwischenschicht, die eine optimale Anbindung der kaltgasgespritzen Reibschicht erlaubt. Dies führt zu einer hohen Schichthaftung der Reibschicht.

Aufgrund der guten Anhaftung und hohen Dichte der Beschichtung kann eine hohe Verschleißbeständigkeit erzielt und die Feinstaubemission beim Bremsen reduziert werden. Die Verschleißbeständigkeit kann durch den Einsatz von in die Reibschicht eingebetteten Verschleißwerkstoffen weiter erhöht werden.

In einem Aspekt besteht die Beschichtung aus der Zwischenschicht und der Reibschicht, wobei die Beschichtung unmittelbar auf der zumindest einen Reibfläche des Grundkörpers angeordnet sein kann. Die Reibfläche des Grundkörpers ist in diesem Fall mit einer zweischichtigen Beschichtung beschichtet.

In einem weiteren Aspekt weist der Grundkörper zumindest zwei Reibflächen auf. Die Reibflächen sind optional auf sich gegenüberliegenden Seiten des Grundkörpers angeordnet. Beispielsweise ist der Grundkörper der Grundköper einer Bremsscheibe, die beidseitig beschichtete Reibflächen aufweist.

Zudem kann der Grundkörper einteilig oder mehrteilig sein. Bei einem mehrteiligen Grundkörper sind die Teile typischerweise miteinander fest verbunden (z.B. verschweißt, verschraubt, vernietet, verklebt und/oder verlötet). Jedes Teil des mehrteiligen Grundkörpers kann eine beschichtete Reibfläche aufweisen. Ein Beispiel für einen mehrteiligen Grundkörper ist eine zweiteilige Bremsscheibe.

Der Grundkörper kann zumindest eines der folgenden Materialien umfassen, oder aus zumindest einem der folgenden Materialen bestehen: Grauguss, Stahlguss, Stahl, Aluminium, insbesondere Aluminiumguss, Aluminiumbasislegierung, Titan, Titanbasislegierung, Keramik, Polymer, Metallpolymer, oder einem Verbundwerkstoff (z.B. faserverstärkte Keramik). Es zeigt sich, dass das Laserauftragsschweißen nicht auf metallische Grundkörper beschränkt ist, sondern auch die Beschichtung von beispielsweise polymeren Grundkörpern oder keramischen Grundkörpern ermöglicht. Somit können polymer- oder keramikbasierte Bremselemente hergestellt werden, die einen geringen Verschleiß aufweisen.

In einem Aspekt bildet die Zwischenschicht mit dem Grundkörper eine Aufmischungszone aus. Diese Aufmischungszone weist im beschichteten Bremselement eine Dicke von 0,05 µm bis 100 µm, oder im Bereich von 0,5µm bis 50 µm, oder im Bereich von 0,5 µm bis 20 µm oder im Bereich von 0,6 µm bis 1 µm auf. Es hat sich gezeigt, dass diese Dicken zu einer besonders guten Anhaftung der Zwischenschicht führen.

Zudem kann die Zwischenschicht eine Schichtdicke im Bereich von 10µm bis 1500 µm, oder im Bereich von 20 µm bis 500 µm, oder im Bereich von 25 µm bis 250 µm aufweisen. Diese Schichtdicken führen zu einem idealen Ausgleich, insbesondere des Wärmeausdehnungskoeffizienten, da sich etwaige thermische Spannungen über die Schichtdicke der Zwischenschicht verteilen. Lokale Spannungsspitzen können also vermieden werden.

Die Zwischenschicht kann eine Eisenbasislegierung und/oder eine Nickelbasislegierung umfassen, oder aus diesen vorgenannten Materialien bestehen. Die Eisenbasislegierung kann einen Chromanteil von 4 bis 40 Gewichts% aufweisen. Der Kupferanteil ist vorzugsweise <0.5 Gewichts%. Die Nickelbasislegierung kann einen Chromanteil von 3 bis 25 Gewichts% aufweisen. Der Kupferanteil ist vorzugsweise <0.5 Gewichts%.

Weiterhin (alternativ oder zusätzlich) kann die Zwischenschicht eines der folgenden Materialien umfassen, oder aus einem der folgenden Materialien bestehen: Eisenbasislegierung, Nickel, Nickelbasislegierung, Titan, Titanlegierung, Kupfer, Kupferlegierung, Kobaltchromlegierung und/oder Aluminiumlegierung.

Durch die Wahl des Materials der Zwischenschicht und etwaiger Zusatzstoffe, bzw. der Materialzusammensetzung, kann der Wärmeausdehnungskoeffizient und/oder die Wärmeleitfähigkeit der Zwischenschicht eingestellt werden.

In einem Aspekt weist die Zwischenschicht einen Wärmeausdehnungskoeffizienten im Bereich von 8*10-6/K bis 25*10-6/K, oder im Bereich von 9*10-6/K bis 18*10-6/K, oder im Bereich von 13*10-6/K bis 17*10-6/K auf. Weiterhin kann die Zwischenschicht eine Wärmeleitfähigkeit im Bereich von 15 W/(m K) bis 450 W/(m K), oder im Bereich von 50 W/(m K) bis 300 W/(m K), oder im Bereich von 80 W/(m K) bis 100 W/(m K) aufweisen.

Die Reibschicht kann eine Schichtdicke im Bereich von 10µm bis 500 µm, oder im Bereich von 20 µm bis 400 µm, oder im Bereich von 25 µm bis 250 µm aufweisen.

Insbesondere kann das Verhältnis der Dicke der Reibschicht zu der Dicke der Zwischenschicht d_{R}:d_{Z} im Bereich von 4:1 bis 1:3, oder im Bereich von 3:1 bis 1:1 der im Bereich von 2:1 bis 3:2 liegen. Beispielswiese kann die Dicke der Reibschicht in etwa 200 µm und die Dicke der Zwischenschicht in etwa 125 µm betragen (d_{R}:d_{Z} = 1,6).

Der Metallwerkstoff der Reibschicht kann zumindest eines der folgenden Materialien umfassen, oder aus einem der folgenden Materialien bestehen: Stahl (z.B. 316L, 430L, 447, oder Duplex-Stahl), Eisenbasislegierung, Nickel, Nickelbasislegierung (z.B. Inconel, Hastelloy, Incoloy), Titan, Titanbasislegierung (z.B. Ti2.5Cu, Ti6Al4V, Ti8Al1Mo1V, Ti3Al8V6Cr4Zr4Mo), Kupfer, Kupferbasislegierung (z.B. CuCrZr, CuAl, CUSn, CuZn), Aluminium, Aluminiumbasislegierung (z.B. AlSiMg, Al2024, A357, Al6061, Al7050), und/oder dergleichen. Insbesondere die Titanbasislegierung kann 5,5 bis 6,75 Gew.-% Aluminium und 3,5 bis 4,5 Gew.-% Vanadium enthalten.

Der Verschleißwerkstoff der Reibschicht kann zumindest eines der folgenden Materialien umfasst, oder aus einem der folgenden Materialien bestehen: Wolframkarbid, Bornitrid, Titankarbid, Eisenkarbid, Siliziumkarbid, Siliziumnitrid, Chromkarbid, Niobcarbid, Titannitrid, Aluminiumoxid, Zirkonoxid, und/oder dergleichen.

Der Verschleißwerkstoff kann in Partikel- und/oder Faserform in der Reibschicht vorliegen. Die Partikelgröße bzw. der Faserdurchmesser kann in einem Bereich von 0,5 µm bis 80 µm, insbesondere im Bereich von 1 µm bis 50 µm, oder im Bereich von 5 µm bis 25 µm liegen.

Der Metallwerkstoff und der Verschleißwerkstoff können so gewählt sein, um eine gewünschte Wärmeleitfähigkeit und/oder einen gewünschten Wärmeausdehnungskoeffizienten einzustellen. Beispielsweise kann die Reibschicht einen Wärmeausdehnungskoeffizienten im Bereich von 8*10-6/K bis 25*10-6/K, oder im Bereich von 9*10-6/K bis 18*10-6/K, oder im Bereich von 13*10-6/K bis 17*10-6/K aufweisen. Zudem kann die Reibschicht eine Wärmeleitfähigkeit im Bereich von 15 W/(m K) bis 450 W/(m K), oder im Bereich von 50 W/(m K) bis 300 W/(m K), oder im Bereich von 80 W/(m K) bis 100 W/(m K) aufweisen.

Die Aufgabe wird zudem durch eine Bremsvorrichtung gelöst. Die Bremsvorrichtung umfasst zumindest ein beschichtetes Bremselement, wie oben beschrieben, wobei das Bremselement rotierbar angeordnet ist. Die Bremsvorrichtung umfasst weiterhin zumindest einen Bremsbelag, wobei der Bremsbelag beweglich relativ zum Bremselement angeordnet ist. Der Bremsbelag ist dazu eingerichtet mit zumindest einer beschichteten Reibfläche des Bremselements zusammenzugreifen, um eine Bremswirkung auf das Bremselement zu erzielen. Diese Bremsvorrichtung zeichnet sich durch einen geringen Verschleiß, hohe Standzeiten und eine geringe Feinstaub-Emission aus.

Die Bremsvorrichtung kann eine Trommel- oder Scheibenbremse sein und für den Einsatz in Fahrzeugen, insbesondere Fahrrädern, Motorrädern, PKWs, LKWs, Nutzfahrzeugen, Schienenfahrzeugen und/oder dergleichen eingerichtet sein.

Weiterhin wird die Aufgabe durch ein Verfahren zum Herstellen eines beschichteten Bremselements, insbesondere einer Bremsschreibe oder einer Bremstrommel, gelöst, wobei das Bremselement das oben beschriebene Bremselement ist. Das Verfahren umfasst die folgenden Schritte:
- Bereitstellen eines Grundkörpers, wobei der Grundkörper zumindest eine Reibfläche aufweist. Das Bereitstellen kann das tatsächliche Herstellen (z.B. Gießen, Sintern, ...) des Grundkörpers und dessen etwaige spanende Bearbeitung umfassen, sowie ein einfaches Zur-Verfügung-Stellen des Grundkörpers.
- Laserauftragsschweißen einer Zwischenschicht auf die zumindest eine Reibfläche (beispielsweise einer Nickel- und/oder Eisenbasislegierung, wie oben beschrieben). Das Laserauftragsschweißen erfolgt vorzugsweise wie oben beschrieben. Insbesondere kann das Laserauftragsschweißen ein Laser-Cladding-Verfahren (LC), ein High-Speed-Laser-Cladding-Verfahren (HSLC) oder ein Extreme High-Speed-Laser-Cladding Verfahren (EHLA) sein.
- Kaltgasspritzen eines Beschichtungswerkstoffs auf die Zwischenschicht, unter Bildung einer Reibschicht, wobei der Beschichtungswerkstoff einen Metallwerkstoff umfasst oder aus einem Metallwerkstoff besteht.

Der Beschichtungswerkstoff kann weiterhin einen Verschleißwerkstoff und/oder ein Vorprodukt des Verschleißwerkstoffs umfasst.

Der Verschleißwerkstoff kann beim Kaltgasspritzen in den Metallwerkstoff zumindest teilweise eingebettet werden. Der Beschichtungswerkstoff kann also ein Metallwerkstoff-Pulver und ein Verschleißwerkstoff-Pulver (Pulvergemisch) Umfassen.

Alternativ oder zusätzlich kann der Verschleißwerkstoff und/oder das Vorprodukt des Verschleißwerkstoffs vor dem Kaltgasspritzen in dem Metallwerkstoff zumindest teilweise eingebettet sein. Alle oder ein Teil der Pulverpartikel des Beschichtungswerkstoffs können somit neben dem Metallwerkstoff den zumindest eine Verschleißwerkstoff, ein Vorprodukt des zumindest einen Verschleißwerkstoffs und/oder den zumindest eine Zusatzwerkstoff umfassen.

Wie oben beschrieben ist, kann das das Vorprodukt des Verschleißwerkstoffs während des Kaltgasspritzens chemisch zum Verschleißwerkstoff umgewandelt werden.

Vor dem Laserauftragsschweißen der Zwischenschicht kann das Verfahren weiterhin ein Bearbeiten der zu beschichtenden Reibfläche umfassen. Das Bearbeiten kann zumindest einen der folgenden Schritte umfasst:
- Strahlen (z.B. Sandstrahlen, Kugelstrahlen, Wasserstrahlen, ...) der zumindest einen Reibfläche;
- mechanische Bearbeitung der zumindest einen Reibfläche, insbesondere ein mechanisches Aufrauen oder Glätten der zumindest einen Reibfläche (z.B. durch Drehen, Fräsen, Schleifen, Honen, ...);
- Laserbearbeiten der zumindest einen Reibfläche, insbesondere Laserreinigen und/oder Laserstrukturieren, und/oder
- Temperieren (Kühlen oder Erwärmen) der zumindest einen Reibfläche.

### Kurze Beschreibung der Figuren

Die Erfindung wird nachfolgend anhand der beigefügten Figuren beispielhaft näher erläutert. Es zeigen:
- Figur 1:: eine schematische Schnittdarstellung durch eine Bremsscheibe gemäß einer Ausführungsform der Erfindung;
- Figur 2:: eine Detailansicht der in Figur 1 dargestellten Bremsscheibe in vergrößerter Darstellung;
- Figur 3:: eine schematische Darstellung eines erfindungsgemäßen Herstellungsverfahrens;
- Figur 4:: eine schematische Darstellung des Auftrages der Zwischenschicht;
- Figur 5:: eine schematische Darstellung des Auftrages der Reibschicht, und
- Figur 6:: eine schematische, stark vergrößerte Darstellung eines Schnittbilds der Beschichtung.

### Beschreibung der Figuren

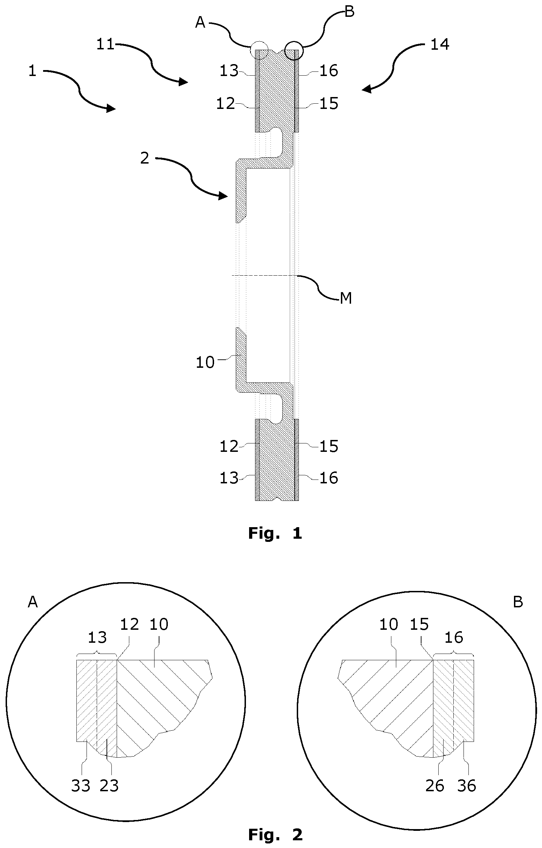

Figur 1 zeigt ein Bremselement, insbesondere eine Bremsscheibe 1 für eine Scheibenbremse von Fahrzeugen, beispielsweise Autos, Lastkraftwagen, Motorrädern, Fahrrädern oder Schienenfahrzeugen.

Die Bremsscheibe 1 umfasst einen Grundkörper 10 mit einem im dargestellten Ausführungsbeispiel topfförmigen Zentralteil und einem sich vom Zentralteil radial nach außen erstreckenden, ringförmigen Scheibenkörper. Der Grundkörper 1 ist im dargestellten Ausführungsbeispiel einteilig, kann jedoch auch mehrteilig sein. Bevorzugt besteht der Grundkörper aus Stahlguss, Grauguss, Aluminiumguss, einem Polymer oder Verbundwerkstoff.

Das Zentralteil dient in bekannter Weise zur Befestigung der Bremsscheibe 1 an einem rotierenden Teil, beispielsweise an einer Nabe des Fahrzeugs. Der sich über das Zentralteil radial hinaus erstreckende ringförmige Scheibenkörper ist in einer Hauptebene angeordnet, die senkrecht zu einer Mittelachse M der Bremsscheibe 1 verläuft.

Auf sich gegenüberliegenden Seiten 11, 14 der Bremsscheibe 1 ist jeweils eine Reibfläche 12, 15 vorgesehen. Jede der Reibflächen 12, 15 ist mit einer Beschichtung 13, 16 beschichtet.

Die Beschichtung 13 der ersten Seite 11 der Bremsscheibe 1 ist in Detail A und die Beschichtung 16 der zweiten Seite 14 der Bremsscheibe 1 ist in Detail B (s. Fig. 2) genauer dargestellt. Die Beschichtung 13 ist im Wesentlichen gleich der Beschichtung 16.

Wie in Figur 2 gezeigt ist, umfasst die Beschichtung 13, 16 eine Zwischenschicht 23, 26 und eine Reibschicht 33, 36. Die Zwischenschicht 23, 26 ist zwischen dem Grundkörper 10 und der Reibschicht 33, 36 angeordnet und mittels Laserauftragsschweißen auf die Reibfläche 12, 15 aufgebracht. Die Zwischenschicht umfasst beispielsweise eine Eisenbasis- und/oder Nickelbasislegierung.

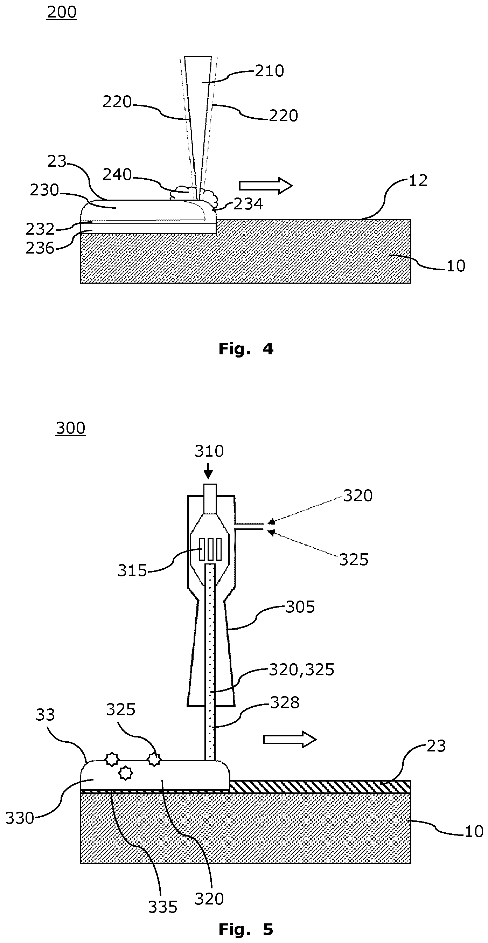

Die Reibschicht 33, 36 ist mittels Kaltgasspritzen aufgebracht und umfasst einen Metallwerkstoff 320 (s. Fig. 5) und einen Verschleißwerkstoff 325 (s. Fig. 5). Der Metallwerkstoff kann Stahl (z.B. 316L, 430L, M3/2, M152), Eisenbasislegierung, Nickel, Nickelbasislegierung (z.B. IN625, IN718, Invar36, NICR, MCRAIY), Titan, Titanbasislegierung (z.B. Ti6Al4V, TiAl), Kupfer, Kupferbasislegierung (z.B. CuCrZr, CuAl, CUSn, CuZn), Aluminium, Aluminiumbasislegierung (z.B. AA2024, A357, AA6061, AA7050), und/oder dergleichen umfassen. Der Verschleißwerkstoff kann beispielsweise Wolframkarbid, Borkarbid, Titankarbid, Eisenkarbid, Siliziumkarbid, Siliziumnitrid, Chromkarbid, Niobcarbid, Titannitrid, Aluminiumoxid und/oder Zirkonoxid umfassen.

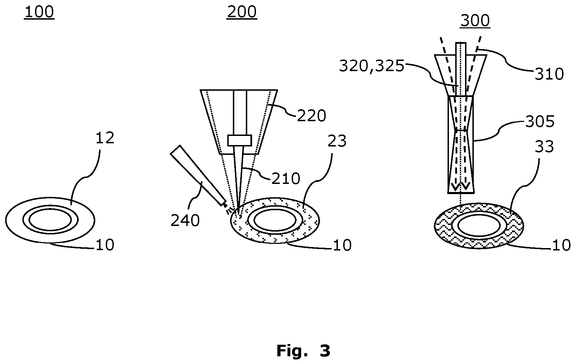

In Figur 3 ist ein Verfahren zum Herstellen eines beschichteten Bremselements 1, insbesondere einer Bremsschreibe dargestellt. Zunächst wird in Schritt 100 ein Grundkörper 10 bereitgestellt, wobei der Grundkörper 10 zumindest eine Reibfläche 12 aufweist.

In Schritt 200 erfolgt das Laserauftragsschweißen der Zwischenschicht 23 auf die zumindest eine Reibfläche 12. Das Material 220 der Zwischenschicht wird beispielsweise in Pulverform über eine Düse bereitgestellt. Ein Laserstrahl 210 schmilzt den Grundkörper lokal auf. In das entstehende Schmelzbad wird das Material 220 der Zwischenschicht appliziert und aufgeschmolzen, sodass es sich teilweise mit dem Material des Grundkörpers vermischt und schließlich auf der Reibfläche 12 anhaftet. Zusätzlich kann ein Schutzgas 240 wie Argon auf das Schmelzbad gerichtet werden, um unerwünschte Oxidationen zu vermeiden.

In Schritt 300 wird die Reibschicht 33 durch Kaltgasspritzen aufgetragen. Hierzu wird das Material der Reibschicht (Metallwerkstoff 320 und Verschleißwerkstoff 325 zusammen mit einem Prozessgas 310 (z.B. Stickstoff, Helium, Argon, C02, Luft, Wasserdampf) in einer Laval-Düse 305 stark beschleunigt und unter Bildung der Reibschicht 33 auf die Zwischenschicht 23 gespritzt.

In Fig. 4 ist das Laserauftragsschweißen 200 nochmals exemplarisch dargestellt. Über einen Laser (beispielsweise ein Nd:YAG-Laser, ein COz-Laser, oder dergleichen) bzw. einen Laserstrahl 210 wird eine Oberfläche des Grundkörpers 10 bzw. die Reibfläche 12 gezielt aufgeschmolzen. Mithin bildet sich ein lokal eng begrenztes Schmelzbad 234. Durch die lokale Begrenzung des Schmelzbades 234 ist der Wärmeeintrag in den Grundkörper 10 vergleichsweise gering, sodass sich nur eine kleine Wärmeeinflusszone 236 bildet.

Zeitgleich wird das Material 220 der Zwischenschicht (hier in Pulverform) in das vom Laser erzeugte Schmelzbad 234 appliziert. Das Material kann neben Metall und Metalllegierungen auch Zusatzstoffe umfassen. Im Schmelzbad 234 vermischt sich das aufgeschmolzene Material des Grundkörpers mit dem applizierten Material 220, sodass sich eine feste, verschweißte Verbindung zwischen dem aufgetragenen Material 230 und dem Grundkörper 10 ausbildet. Zwischen der Zwischenschicht 23 und dem Grundkörper 10 bildet sich, bedingt durch das Aufschmelzen, ein Übergangsbereich, der auch als Aufmischungszone 232 bezeichnet wird. Um die Reibfläche vollständig zu Beschichten, kann der Laser relativ zum Grundkörper bewegt werden, und/oder der Grundkörper kann relativ zum Laser bewegt werden. Die Bewegungsrichtung des Lasers ist durch einen Pfeil dargestellt.

In Fig. 5 ist das Kaltgasspritzen 300 nochmals exemplarisch dargestellt. Beim Kaltgasspritzen 300 wird der Beschichtungswerkstoff (d.h. das Material der späteren Reibschicht 33) in Pulverform mit sehr hoher Geschwindigkeit auf die Zwischenschicht 23 aufgebracht. Dabei wird die Zwischenschicht 23 zumindest oberflächlich verdichtet, wie hier im Verdichtungsbereich 335 dargestellt ist. Hierdurch werden insbesondere Spannungen in der Zwischenschicht 23 abgebaut und die Rissbildungsgefahr signifikant reduziert.

Der Beschichtungswerkstoff kann neben dem Metallwerkstoff 320 und dem Verschleißwerkstoff 325 weitere Zusatzstoffe, wie Kupfer umfassen.

Um den Beschichtungswerkstoff 320, 325 entsprechend zu beschleunigen wird ein Prozessgas 310 unter hohem Druck in eine Spritzvorrichtung geleitet und beispielsweise über Heizelemente 315 erwärmt. Die Erwärmungstemperatur liegt in einem Bereich von 300°C bis 1300°C. In der Spritzvorrichtung wird das Prozessgas 310 mit dem pulverförmigen Beschichtungswerkstoff, d.h. dem Metallwerkstoff 320 und dem Verschleißwerkstoff 325 vermischt, wobei die Erwärmungstemperatur unterhalb der Schmelztemperatur des Beschichtungswerkstoffs liegt.

Anschließend wird das Pulver-Gas-Gemisch durch eine konvergent-divergent geformte Düse (Laval-Düse 305) geleitet. Dies hat zur Folge, dass das Pulver-Gas-Gemisch auf sehr hohe Geschwindigkeiten, insbesondere auf Überschallgeschwindigkeit beschleunigt wird. Zudem kühlt das Pulver-Gas-Gemisch stark ab.

Der stark beschleunigte, pulverförmige Beschichtungswerkstoff kann in einem Spritzstrahl 328 auf die Zwischenschicht 23 geleitet werden. Der pulverförmige Beschichtungswerkstoff 320, 325 verbindet sich sodann aufgrund der hohen kinetischen Energie fest mit der Zwischenschicht 23. Das aufgetragene Material 330 bildet die Reibschicht 33. In der Reibschicht 33 ist der Verschleißwerkstoff (beispielsweise Partikel) 325 zumindest teilweise oder vollständig in den Metallwerkstoff 320 eingebettet.

Um die Zwischenschicht vollständig zu Beschichten, kann der Spritzstrahl 328 bzw. die Laval-Düse 305 relativ zum Grundkörper bewegt werden, und/oder der Grundkörper kann relativ zum Spritzstrahl 328 bzw. der Laval-Düse 305 bewegt werden. Die Bewegungsrichtung des Spritzstrahls ist durch einen Pfeil dargestellt.

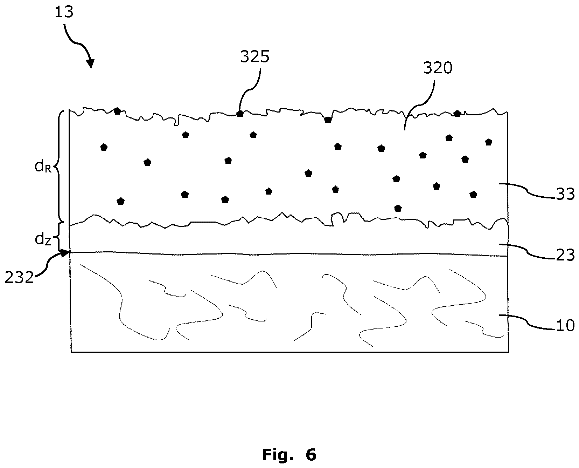

Figur 6 zeigt eine schematische, stark vergrößerte Darstellung eines Schnittbilds der Beschichtung 13. Die Beschichtung 13 ist auf einen Grundköper 10, insbesondere auf eine Reibfläche des Grundkörpers 10 (hier aus Grauguss) aufgetragen. Die Beschichtung 13 ist eine zwei-schichtige Beschichtung, die eine Zwischenschicht 23 und eine Reibschicht 33 umfasst. Die Zwischenschicht 23 ist mittels Laserauftragsschweißen auf den Grundkörper 10 aufgebracht. Zwischen dem Grundkörper 10 und der Zwischenschicht bildet sich eine Aufmischungszone 232, die hier im Vergleich zu den Schichtdicken der einzelnen Schichten sehr dünn ausgebildet ist (z.B. < 0.5 µm). Aufgrund des Laserauftragsschweißens, bildet sich eine stoffschlüssige, insbesondere metallurgische Verbindung. Die Zwischenschicht 23 weist nach dem Laserauftragsschweißen eine hohe Rauigkeit (im Vergleich zum Grundkörper) auf. Dies hat zur Folge, dass die kaltgasgespritze Reibschicht 33 sehr gut, im Wesentlichen formschlüssig, an der Zwischenschicht 23 anhaftet. Im gezeigten Ausführungsbeispiel ist in dem Metallwerkstoff 320 der Reibschicht 33 ein partikelförmiger Verschleißwerkstoff (z.B. Wolframkarbid) 325 zumindest teilweise eingebettet. Einige der Partikel sind vollständig von der Matrix des Metallwerkstoffs 320 umschlossen, andere liegen oberflächlich frei und sind nur teilweise eingebettet bzw. umschlossen. Es versteht sich, dass die Reibschicht 320 eine andere Zusammensetzung aufweisen kann, und insbesondere aus Metallwerkstoff 320 bestehen kann.

Die gezeigte Reibschicht kann beispielsweise eine Dicke d_{R} von etwa 200 µm aufweisen. Die Zwischenschicht kann eine Dicke dz von etwa 125 µm aufweisen.

### Bezugszeichenliste

- 1: Bremselement
- 2: Nabe
- 10: Grundkörper
- 11: erste Seite
- 12: Reibfläche
- 13: Beschichtung
- 14: zweite Seite
- 15: Reibfläche
- 16: Beschichtung
- 23: Zwischenschicht
- 26: Zwischenschicht
- 33: Reibschicht
- 36: Reibschicht
- 100: Bereitstellen des Grundkörpers
- 200: Laserauftragsschweißen der Zwischenschicht
- 210: Laserstrahl
- 220: Material der Zwischenschicht
- 230: aufgetragenes Material
- 232: Aufmischungszone
- 234: Schmelzbad
- 236: Wärmeeinflusszone
- 240: Schutzgas
- 300: Kaltgasspritzen der Reibschicht
- 305: Laval-Düse
- 310: Prozessgas
- 315: Heizelemente
- 320: Metallwerkstoff
- 325: Verschleißwerkstoff
- 328: Spritzstrahl
- 330: aufgetragenes Material
- 335: Verdichtungsbereich
- M: Mittelachse

## Patentansprüche

1. Beschichtetes Bremselement (1), insbesondere eine Bremsschreibe oder eine Bremstrommel, wobei das beschichtete Bremselement (1)
einen Grundkörper (10) und zumindest eine Reibfläche (12, 15) aufweist, welche Reibfläche (12, 15) am Grundkörper (10) angeordnet ist; wobei
auf der zumindest einen Reibfläche (12, 15) eine Beschichtung (13, 16) angeordnet ist, wobei die Beschichtung (13, 16) eine Zwischenschicht (23, 26) und eine Reibschicht (33, 36) umfasst, wobei
die Zwischenschicht (23, 26) zwischen dem Grundkörper (10) und der Reibschicht (33, 36) angeordnet und mittels Laserauftragsschweißen auf die Reibfläche (12, 15) aufgebracht ist, und wobei
die Reibschicht (33, 36) mittels Kaltgasspritzen aufgebracht ist und zumindest einen Metallwerkstoff umfasst.

2. Beschichtetes Bremselement (1) nach Anspruch 1, wobei die Reibschicht weiterhin zumindest einen Verschleißwerkstoff umfasst, und wobei der Verschleißwerkstoff (325) in der Reibschicht (33, 36) in den Metallwerkstoff (320) zumindest teilweise eingebettet ist.

3. Beschichtetes Bremselement (1) nach Anspruch 1 oder 2, wobei die Beschichtung (13, 16) aus der Zwischenschicht (23, 26) und der Reibschicht (33, 36) besteht, und wobei die Beschichtung (13, 16) unmittelbar auf der zumindest einen Reibfläche (12, 15) des Grundkörpers (10) angeordnet ist.

4. Beschichtetes Bremselement (1) nach einem der Ansprüche 1 bis 3, wobei der Grundkörper (10) zumindest eines der folgenden Materialien umfasst, oder aus zumindest einem der folgenden Materialen besteht:
Grauguss;
Stahlguss;
Stahl;
Aluminium, insbesondere Aluminiumguss;
Aluminiumbasislegierung;
Titan;
Titanbasislegierung;
Keramik;
Polymer;
Metallpolymer, oder
Verbundwerkstoff.

5. Beschichtetes Bremselement (1) nach einem der Ansprüche 1 bis 4, wobei die Zwischenschicht (23, 26)
mit dem Grundkörper eine Aufmischungszone (232) ausbildet, die in dem beschichteten Bremselement (10) eine Dicke von 0,05 bis 100 µm, oder im Bereich von 0,5 µm bis 50 µm, oder im Bereich von 0,5 µm bis 20 µm oder im Bereich von 0,6 µm bis 1 µm aufweist und/oder wobei
die Zwischenschicht (23, 26) eine Schichtdicke im Bereich von 10 µm bis 1500 µm, oder im Bereich von 20 µm bis 500 µm, oder im Bereich von 25 µm bis 250 µm aufweist.

6. Beschichtetes Bremselement (1) nach einem der Ansprüche 1 bis 5, wobei die Zwischenschicht (23, 26) zumindest eines der folgenden Materialien umfasst, oder aus einem der folgenden Materialien besteht:
Nickel;
Nickelbasislegierung;
Titan;
Titanlegierung;
Kupfer;
Kupferlegierung;
Kobaltchromlegierung;
Aluminiumlegierung, und/oder
Eisenbasislegierung.

7. Beschichtetes Bremselement (1) nach einem der Ansprüche 1 bis 6, wobei
die Zwischenschicht (23, 26) einen Wärmeausdehnungskoeffizienten im Bereich von 8*10⁻⁶/K bis 25*10⁻⁶/K, oder im Bereich von 9*10⁻⁶/K bis 18*10⁻⁶/K, oder im Bereich von 13*10⁻⁶/K bis 17*10⁻⁶/K aufweist, und/oder wobei
die Zwischenschicht (23, 26) eine Wärmeleitfähigkeit im Bereich von 15 W/(m K) bis 450 W/(m K), oder im Bereich von 50 W/(m K) bis 300 W/(m K), oder im Bereich von 80 W/(m K) bis 100 W/(m K) aufweist.

8. Beschichtetes Bremselement (1) nach einem der Ansprüche 1 bis 7, wobei die Reibschicht eine Schichtdicke im Bereich von 10µm bis 500 µm, oder im Bereich von 20 µm bis 400 µm, oder im Bereich von 25 µm bis 250 µm aufweist.

9. Beschichtetes Bremselement (1) nach einem der Ansprüche 1 bis 8, wobei der Metallwerkstoff (320) der Reibschicht (33, 36) zumindest eines der folgenden Materialien umfasst, oder aus einem der folgenden Materialien besteht:
Stahl;
Eisenbasislegierung;
Nickel;
Nickelbasislegierung;
Titan;
Titanbasislegierung;
Kupfer;
Kupferbasislegierung;
Aluminium, oder
Aluminiumbasislegierung.

10. Beschichtetes Bremselement (1) nach einem der Ansprüche 1 bis 9, wobei der Verschleißwerkstoff (320) zumindest eines der folgenden Materialien umfasst, oder aus einem der folgenden Materialien besteht:
Wolfram karbid;
Borkarbid;
Titankarbid;
Eisenkarbid;
Siliziumkarbid;
Siliziumnitrid;
Chromkarbid;
Niobcarbid;
Titannitrid;
Aluminiumoxid;
Zirkonoxid, und wobei
der Verschleißwerkstoff (320) in Partikel- und/oder Faserform in der Reibschicht (33, 36) vorliegt.

11. Beschichtetes Bremselement (1) nach einem der Ansprüche 1 bis 10, wobei die Reibschicht (33, 36) einen Wärmeausdehnungskoeffizienten im Bereich von 8*10⁻⁶/K bis 25*10⁻⁶/K, oder im Bereich von 9*10⁻⁶/K bis 18*10⁻⁶/K, oder im Bereich von 13*10⁻⁶/K bis 17*10⁻⁶/K aufweist, und/oder wobei
die Reibschicht (33, 36) eine Wärmeleitfähigkeit im Bereich von 15 W/(m K) bis 450 W/(m K), oder im Bereich von 50 W/(m K) bis 300 W/(m K), oder im Bereich von 80 W/(m K) bis 100 W/(m K) aufweist.

12. Bremsvorrichtung, umfassend zumindest ein beschichtetes Bremselement (1) nach einem der Ansprüche 1 bis 11, wobei
das Bremselement rotierbar angeordnet ist; wobei
die Bremsvorrichtung weiterhin zumindest einen Bremsbelag umfasst, wobei der Bremsbelag beweglich relativ zum Bremselement angeordent ist, und dazu eingerichtet ist mit zumindest einer beschichteten Reibfläche (12, 15) des Bremselements (1) zusammenzugreifen, um eine Bremswirkung auf das Bremselement (1) zu erzielen.

13. Verfahren zum Herstellen eines beschichteten Bremselements (1), insbesondere einer Bremsschreibe oder einer Bremstrommel nach einem der Ansprüche 1 bis 12, wobei das Verfahren folgendes umfasst:
Bereitstellen (100) eines Grundkörpers (10), wobei der Grundkörper (10) zumindest eine Reibfläche (12, 15) aufweist;
Laserauftragsschweißen (200) einer Zwischenschicht (23, 26) auf die zumindest eine Reibfläche (12, 15), wobei das Laserauftragsschweißen (300) optioanl ein Laser-Cladding-Verfahren, ein High-Speed-Laser-Cladding-Verfahren oder ein Extreme High-Speed-Laser-Cladding Verfahren ist, und
Kaltgasspritzen (300) eines Beschichtungswerkstoff auf die Zwischenschicht (23, 26) unter Bildung einer Reibschicht (33, 36), wobei der Beschichtungswerkstoff einen Metallwerkstoff (320) umfasst, oder aus einem Metallwerkstoff besteht.

14. Verfahren zum Herstellen eines beschichteten Bremselements (1), nach Anspruch 13, wobei der Beschichtungswerkstoff weiterhin einen Verschleißwerkstoff (325) und/oder ein Vorprodukt des Verschleißwerkstoffs umfasst, und wobei
der Verschleißwerkstoff (325) beim Kaltgasspritzen in den Metallwerkstoff (320) zumindest teilweise eingebettet wird, und/oder wobei
der Verschleißwerkstoff (325) und/oder das Vorprodukt des Verschleißwerkstoffs vor dem Kaltgasspritzen in dem Metallwerkstoff (320) zumindest teilweise eingebettet ist, und/oder wobei
das Vorprodukt des Verschleißwerkstoffs während des Kaltgasspritzens chemisch zum Verschleißwerkstoff (325) umgewandelt wird.

15. Verfahren zum Herstellen eines beschichteten Bremselements (1) nach Anspruch 13 oder 14, wobei
das Verfahren weiterhin ein Bearbeiten der zu beschichtenden Reibfläche (12, 15) umfasst, wobei
das Bearbeiten vor dem Laserauftragsschweißen (200) erfolgt, und wobei
das Bearbeiten zumindest einen der folgenden Schritte umfasst:
Strahlen der zumindest einen Reibfläche (12, 15);
mechanische Bearbeitung der zumindest einen Reibfläche (12, 15), insbesondere ein mechanisches Aufrauen oder Glätten der zumindest einen Reibfläche (12, 15);
Laserbearbeiten der zumindest einen Reibfläche (12, 15), insbesondere Laserreinigen und/oder Laserstrukturieren, und/oder
Temperieren der zumindest einen Reibfläche (12, 15).
